# EUROPEAN PATENT APPLICATION

(11) **EP 4 280 700 A1**
(43) Date of publication of application: **22.11.2023**
(21) Application number: 21918488.4
(22) Date of filing: 14.01.2021
(51) Int. Cl.: H04W 52/02, H04W 72/02, H04W 72/04, H04W 76/14

(54) **COMMUNICATION METHOD AND APPARATUS, AND STORAGE MEDIUM**

(71) Applicant: Beijing Xiaomi Mobile Software Co., Ltd., Beijing 100085 (CN)
(72) Inventor: ZHAO, Qun, Beijing 100085 (CN)
(74) Representative: dompatent von Kreisler Selting Werner - Partnerschaft von Patent- und Rechtsanwälten mbB
(86) International application number: PCT/CN2021/071936
(87) International publication number: WO 2022/151280

(57) **Abstract**

The present disclosure relates to a communication method and apparatus, and a storage medium. The communication method is applied to a user equipment, and comprises: in response to the user equipment needing to perform a re-evaluation or preemption determination on a first direct connection transmission time frequency resource in a first time unit, determining a time unit set that needs to perform channel monitoring; and performing a re-evaluation or preemption determination on the first direct connection transmission time frequency resource according to a direct connection channel monitoring result on the time unit set. By means of the present disclosure, channel monitoring is performed on re-evaluation or preemption, and communication energy saving is achieved in the case of partial monitoring.

## Description

### TECHNICAL FIELD

The present disclosure relates to a technical field of communication, and more particularly to a communication method, a communication device, and a storage medium.

### BACKGROUND

Continuous emergence of a new generation of new Internet applications has put forward higher requirements for the wireless communication technology, driving the continuous evolution of the wireless communication technology to meet needs of the applications. Energy saving is one of hotspots in the study of the wireless communication technology.

An effective method for sidelink energy saving in R17 New Radio (NR for short) sidelink communication is to reduce the time for a user equipment (UE for short) to perform sensing, and the user equipment performs sensing in certain time. LTE-V2X in R14 supports a resource selection for partial monitoring, and defines sensing conditions that need to be satisfied for the resource selection for the partial monitoring.

Currently, a sidelink resource selection in R16 supports preemption and re-evaluation mechanisms, which also rely on user monitoring. Before performing a sidelink transmission on a selected time-frequency resource, the user equipment needs to check whether the selected resource is still suitable for transmission according to a result of previous monitoring, if no, it needs to reselect the resource. When the selected time-frequency resource is not reserved by other transmissions, it is called re-evaluation. When the selected time-frequency resource has been reserved by other transmissions, it is called preemption.

However, the preemption and reevaluation mechanisms are newly introduced mechanisms in Rel16, and how to save energy for the user equipment that supports the preemption and/or reevaluation is also one of hotspots that need to be studied.

### SUMMARY

In order to overcome problems existing in the related art, the present disclosure provides a communication method, a communication device and a storage medium.

According to a first aspect of embodiments of the present disclosure, a communication method is provided, which is performed by a user equipment and includes: in response to determining that the user equipment is to perform a re-evaluation or preemption check on a first sidelink transmission time-frequency resource in a first time unit, determining a set of time units in which sensing is to be performed; and performing the re-evaluation or preemption check on the first sidelink transmission time-frequency resource according to a sidelink sensing result in the set of time units.

In an embodiment, determining the set of time units in which the sensing is to be performed includes: determining the set of time units in which the sensing is to be performed according to a second time unit. The second time unit includes a time domain position of the first sidelink transmission time-frequency resource.

In an embodiment, determining the set of time units in which the sensing is to be performed according to the second time unit includes: determining the set of time units in which the sensing is to be performed according to the first time unit and the second time unit.

In an embodiment, the set of time units includes time units belonging between m-Ta and n-Tb; where the m is the second time unit, the n is the first time unit, the Ta is a first offset value associated with the second time unit, and the Tb is a second offset value associated with the first time unit.

In an embodiment, the first offset value is a fixed value; or, the first offset value is a predefined default value; or the first offset value is determined based on a downlink control signaling sent from a network device.

In an embodiment, the first offset value is the fixed value, and the fixed value is a maximum time difference between reserved aperiodic sidelink transmission time-frequency resources.

In an embodiment, the second offset value is a predefined default value; or the first offset value is determined based on a communication capability of the user equipment.

In an embodiment, the first offset value is smaller than a difference value between the second time unit and a third time unit. The third time unit is a time domain position when the user equipment selects the first sidelink transmission time-frequency resource; or the third time unit is a time domain position where the user equipment performs a second sidelink transmission, and the second sidelink transmission reserves the first sidelink transmission time-frequency resource.

In an embodiment, the set of time units includes a time unit corresponding to a difference value between the second time unit and a third offset value, and the third offset value is determined based on a period value of a periodic time-frequency resource reservation of the user equipment.

In an embodiment, the third offset value is the period value of the periodic time-frequency resource reservation of the user equipment, or an integer multiple of the period value of the periodic time-frequency resource reservation of the user equipment.

In an embodiment, the period value of the periodic time-frequency resource reservation is determined based on a set of period values of a periodic resource reservation. The set of period values of the periodic resource reservation is determined based on a pre-configuration message or based on a downlink control signaling sent from a network device.

In an embodiment, determining the set of time units in which the sensing is to be performed includes: determining the set of time units in which the sensing is to be performed based on first information, and the first information is configured to indicate information for determining the set of time units.

In an embodiment, the first information is determined based on a pre-configuration message or based on a downlink control signaling sent from a network device.

In an embodiment, the first information is configured to indicate one or a combination of following information: the first time unit; a second time unit, which includes a time domain position of the first sidelink transmission time-frequency resource; a first offset value associated with the second time unit, and a second offset value associated with the first time unit; a third offset value associated with the second time unit; and the set of time units in which the sensing is to be performed being an empty set.

According to a second aspect of embodiments of the present disclosure, a communication method is provided, which is applied to a user equipment and includes: a processing unit configured to determine a set of time units in which sensing is to be performed in response to determining that the user equipment is to perform a re-evaluation or preemption check on a first sidelink transmission time-frequency resource in a first time unit, and perform the re-evaluation or preemption check on the first sidelink transmission time-frequency resource according to a sidelink sensing result in the set of time units.

In an embodiment, the processing unit is configured to determine the set of time units in which the sensing is to be performed according to a second time unit, and the second time unit includes a time domain position of the first sidelink transmission time-frequency resource.

In an embodiment, the processing unit is configured to determine the set of time units in which the sensing is to be performed according to the first time unit and the second time unit.

In an embodiment, the set of time units includes time units belonging between m-Ta and n-Tb; where the m is the second time unit, the n is the first time unit, the Ta is a first offset value associated with the second time unit, and the Tb is a second offset value associated with the first time unit.

In an embodiment, the first offset value is a fixed value; or the first offset value is a predefined default value; or the first offset value is determined based on a downlink control signaling sent from a network device.

In an embodiment, the first offset value is the fixed value, and the fixed value is a maximum time difference between reserved aperiodic sidelink transmission time-frequency resources.

In an embodiment, the second offset value is a predefined default value; or the first offset value is determined based on a communication capability of the user equipment.

In an embodiment, the first offset value is smaller than a difference value between the second time unit and a third time unit. The third time unit is a time domain position when the user equipment selects the first sidelink transmission time-frequency resource; or the third time unit is a time domain position where the user equipment performs a second sidelink transmission, and the second sidelink transmission reserves the first sidelink transmission time-frequency resource.

In an embodiment, the set of time units includes a time unit corresponding to a difference value between the second time unit and a third offset value, and the third offset value is determined based on a period value of a periodic time-frequency resource reservation of the user equipment.

In an embodiment, the third offset value is the period value of the periodic time-frequency resource reservation of the user equipment, or an integer multiple of the period value of the periodic time-frequency resource reservation of the user equipment.

In an embodiment, the period value of the periodic time-frequency resource reservation is determined based on a set of period values of a periodic resource reservation. The set of period values of the periodic resource reservation is determined based on a pre-configuration message or based on a downlink control signaling sent from a network device.

In an embodiment, the processing unit is configured to determine the set of time units in which the sensing is to be performed based on first information, and the first information is configured to indicate information for determining the set of time units.

In an embodiment, the first information is determined based on a pre-configuration message or based on a downlink control signaling sent from a network device.

In an embodiment, the first information is configured to indicate one or a combination of following information: the first time unit; a second time unit, which includes a time domain position of the first sidelink transmission time-frequency resource; a first offset value associated with the second time unit, and a second offset value associated with the first time unit; a third offset value associated with the second time unit; and the set of time units in which the sensing is to be performed being an empty set.

According to a third aspect of embodiments of the present disclosure, a communication device is provided, which includes: a processor; and a memory configured to store a processor-executable instruction. The processor is configured to execute the communication method according to the first aspect or any embodiment of the first aspect.

According to a fourth aspect of embodiments of the present disclosure, a non-transitory computer-readable storage medium is provided. When an instruction in the storage medium is executed by a processor, a user equipment is capable of executing the communication method according to the first aspect or any embodiment of the first aspect.

The technical solutions provided in embodiments of the present disclosure may include the following advantageous effects. When the user equipment is to perform a re-evaluation or preemption check, the set of time units in which the sensing is to be performed is determined, and the re-evaluation or preemption check is performed according to the sidelink sensing result in the set of time units, thereby realizing the sensing for the re-evaluation or preemption, and realizing the communication energy saving in a case of partial monitoring.

It is to be understood that both the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram showing a communication system according to an illustrative embodiment.
FIG. 2 is a flowchart showing a communication method according to an illustrative embodiment.
FIG. 3 is a flowchart showing a communication method according to an illustrative embodiment.
FIG. 4 is a flowchart showing a communication method according to an illustrative embodiment.
FIG. 5 is a flowchart showing a communication method according to an illustrative embodiment.
FIG. 6 is a flowchart showing a communication method according to an illustrative embodiment.
FIG. 7 is a flowchart showing a communication method according to an illustrative embodiment.
FIG. 8 is a schematic diagram showing slot positions for a re-evaluation or preemption check based on a sensing mechanism according to an illustrative embodiment of the present disclosure.
FIG. 9 is a block diagram of a device according to an illustrative embodiment.
FIG. 10 is a block diagram of a device for a communication according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of devices and methods consistent with some aspects related to the present disclosure as recited in the appended claims.

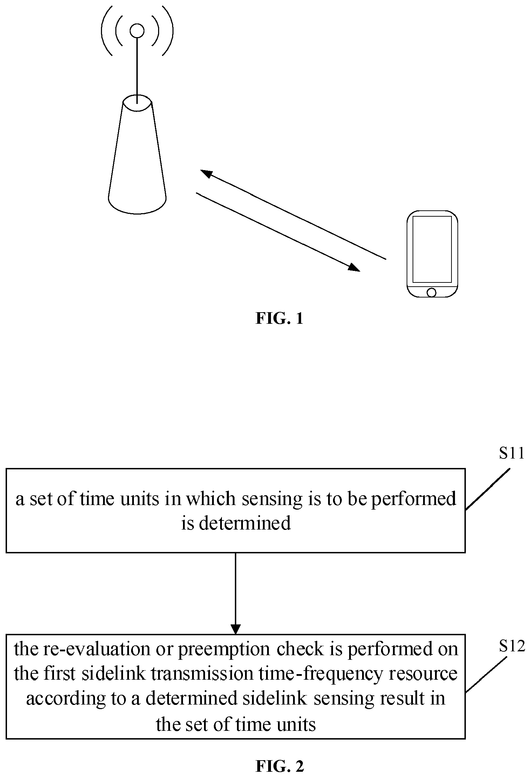

The communication method provided by embodiments of the present disclosure may be applied to a wireless communication system shown in FIG. 1. Referring to FIG. 1, the wireless communication system includes a user equipment (UE for short) and a network device. The user equipment is connected to the network device through a wireless resource, and sends and receives data.

It may be understood that the wireless communication system shown in FIG. 1 is only for schematic illustration. The wireless communication system may also include other network devices, such as core network devices, wireless relay devices, and wireless backhaul devices, which are not shown in FIG. 1. The number of network devices and the number of user equipment included in the wireless communication system are not limited in embodiments of the present disclosure.

It may be further understood that the wireless communication system in embodiments of the present disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be classified into a 2nd generation (2G) network, a 3G network, a 4G network, or a future evolution network, such as a 5G network, which may also be referred to as a new radio (NR) network, according to the capacity, rate, delay and other factors of different networks. For ease of description, a wireless communication network will be sometimes abbreviated as a network in the present disclosure.

Further, the network device involved in the present disclosure may also be referred to as a radio access network device. The radio access network device may be a base station, an evolved node B, a home base station, an access point (AP) in a wireless fidelity (WIFI) system, a wireless relay node, a wireless backhaul node, a transmission point (TP), a transmission and reception point (TRP) or the like, or may also be a gNB in an NR system, or may also be a component or a part of a device that constitutes a base station, etc. The network device may also be a vehicle-mounted device when it is used in a vehicle to everything (V2X) communication system. It is to be understood that the specific technology and specific device form adopted by the network device are not limited in embodiments of the present disclosure.

Further, the user equipment involved in the present disclosure, which may also be referred to as a terminal device, a terminal, a mobile station (MS), a mobile terminal (MT), etc., is a device that provides voice and/or data connectivity to a user. For example, the terminal may be a handheld device, a vehicle-mounted device, or the like that has a wireless connection function. At present, some examples of the terminal are a smart phone (a mobile phone), a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in embodiments of the present disclosure.

Energy saving of the user equipment has become a hotspot in the study of the wireless communication technology. In the related art, energy saving is realized by reducing the time for the user equipment to perform sensing, for example, the user equipment performs sensing in certain time. LTE-V2X in R14 supports a resource selection for partial monitoring, and defines sensing conditions that need to be satisfied for the resource selection for partial monitoring. Currently, the user equipment of Rel-16 Mode2 needs to keep sensing for the resource selection. When the resource selection is triggered, a resource selection window and a set of candidate resources are determined, a candidate resource expected to have strong interference is removed in the resource selection window according to a sensing result, and random selection is made in a set of remaining candidate resources.

Currently, a sidelink resource selection in R16 supports preemption and re-evaluation mechanisms, which also rely on user monitoring. When a user equipment performing a partial monitoring supports the preemption and/or re-evaluation mechanisms at the same time, in addition to the partial monitoring for the resource selection, whether it is necessary to perform sensing for preemption and/or re-evaluation operations, and if necessary, what kind of sensing conditions should be satisfied are problems that needs to be solved.

A communication method is provided in embodiments of the present disclosure. With this method, for a user equipment that has performed partial monitoring for resource selection, when it is determined that a re-evaluation or preemption check is to be performed for the selected resource, sensing is performed, and the re-evaluation or preemption check is performed for the selected resource according to a sensing result.

FIG. 2 is a flowchart showing a communication method according to an illustrative embodiment. As shown in FIG. 2, the communication method is performed by a user equipment and includes steps as follows.

In step S11, a set of time units in which sensing is to be performed is determined.

In embodiments of the present disclosure, when it is determined that the user equipment is to perform a re-evaluation or preemption check, the set of time units in which the sensing is to be performed is determined.

The set of time units includes one or more time units. The time unit may be understood as a time domain position.

It can be understood that the time unit involved in embodiments of the present disclosure may be a physical time unit or a logical time unit, measured in for example a second, a millisecond, a microsecond, a frame, a sub-frame, a slot, an Orthogonal Frequency Division Multiplexing (OFDM for short) symbol, etc. The time units involved in embodiments of the present disclosure may also be corresponding serial numbers after the time units containing the time-frequency resources in a specific sidelink resource pool are arranged and numbered in a chronological order.

In embodiments of the present disclosure, a sidelink transmission time-frequency resource on which the user equipment performs the re-evaluation or preemption check may be called a first sidelink transmission time-frequency resource. A time domain position where the user equipment performs the re-evaluation or preemption check on a selected first sidelink transmission time-frequency resource is called a first time unit. A time domain position of the first sidelink transmission time-frequency resource is called a second time unit.

In an embodiment, the user equipment may, in response to determining that the re-evaluation or preemption check on the first sidelink transmission time-frequency resource is to be performed in a first time unit, determine a set of time units in which the sensing is to be performed.

In step S 12, the re-evaluation or preemption check is performed on the first sidelink transmission time-frequency resource according to a determined sidelink sensing result in the set of time units.

In embodiments of the present disclosure, the user equipment performs sidelink sensing in the set of time units in which the sensing is to be performed, performs an exclusion operation on a set of candidate resources according to the sidelink sensing result, and performs the re-evaluation or preemption check according to a resource exclusion result.

In the communication method provided by embodiments of the present disclosure, the set of time units in which the sensing is to be performed for the re-evaluation or preemption check may be determined according to the second time unit.

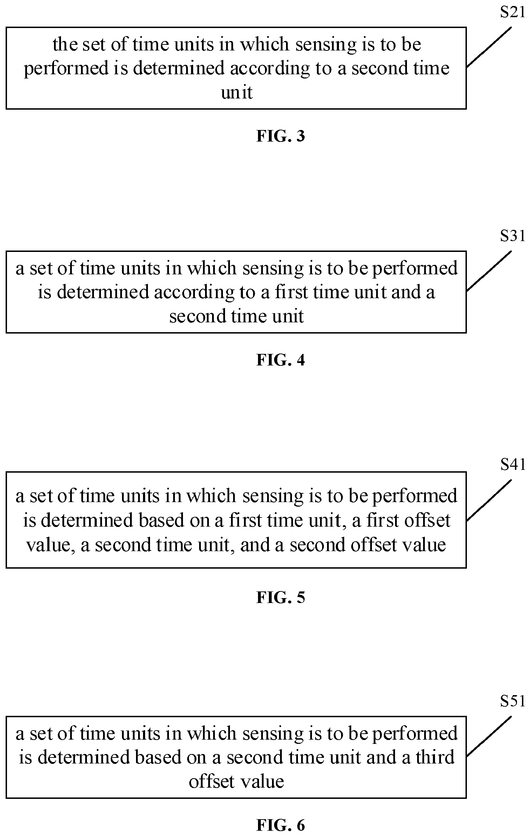

FIG. 3 is a flowchart showing a communication method according to an illustrative embodiment. As shown in FIG. 3, the communication method is performed by a user equipment and includes steps as follows.

In step S21, the set of time units in which the sensing is to be performed is determined according to a second time unit.

The second time unit includes a time domain position of the first sidelink transmission time-frequency resource, and the second time unit is after the first time unit. The first time unit is a time domain position where the user equipment performs the re-evaluation or preemption check on a selected first sidelink transmission time-frequency resource.

For example, the user equipment performs the re-evaluation or preemption check on the selected first sidelink transmission time-frequency resource in a time unit n, and the first sidelink transmission time-frequency resource is located at a time unit m, then m is greater than n.

The user equipment may determine the set of time units in which the sensing is to be performed for the re-evaluation or preemption check according to the time domain position (i.e., the second time unit) of the first sidelink transmission time-frequency resource.

The user equipment performs an exclusion operation on a set of candidate resources according to a sidelink sensing result in the set of time units in which the sensing is to be performed, and performs the re-evaluation or preemption check according to a resource exclusion result.

In an example, in response to performing a re-evaluation, if a set of candidate resources after the resource exclusion does not include the first sidelink transmission time-frequency resource, the re-evaluation of the first time-frequency resource is reported to a higher layer, and the transmission on the first time-frequency resource may be canceled and a resource selection will be performed again by the higher layer. In response to performing a reemption, if the set of candidate resources after the resource exclusion does not include the first sidelink transmission time-frequency resource, and a specific priority requirement is satisfied, the reemption of the first time-frequency resource is reported to a higher layer, and the transmission on the first time-frequency resource may be canceled and a resource selection will be performed again by the higher layer.

In the communication method provided by embodiments of the present disclosure, the set of time units in which the sensing is to be performed for the re-evaluation or preemption check may be determined according to the first time unit and the second time unit.

FIG. 4 is a flowchart showing a communication method according to an illustrative embodiment. As shown in FIG. 4, the communication method is performed by a user equipment and includes steps as follows.

In step S31, a set of time units in which sensing is to be performed is determined according to a first time unit and a second time unit.

In embodiments of the present disclosure, in the case where the set of time units in which the sensing is to be performed is determined according to the first time unit and the second time unit, an offset value associated with the first time unit and/or the second time unit may be determined based on a processing capability of the user equipment for the resource selection and/or a periodic or aperiodic time-frequency resource adopted by the user equipment to perform a sidelink transmission, and the set of time units in which the sensing is to be performed is determined based on the offset value.

In an embodiment, when the user equipment in embodiment of the present disclosure uses an aperiodic sidelink transmission time-frequency resource, a first offset value associated with the second time unit may be set, and a second offset value associated with the first time unit may also be set. The set of time units in which the sensing is to be performed is determined based on the first time unit, the first offset value, the second time unit, and the second offset value.

FIG. 5 is a flowchart showing a communication method according to an illustrative embodiment. As shown in FIG. 5, the communication method is performed by a user equipment and includes steps as follows.

In step S41, a set of time units in which sensing is to be performed is determined based on a first time unit, a first offset value, a second time unit, and a second offset value.

In an embodiment, the first offset value associated with the second time unit is a fixed value; or, the first offset value associated with the second time unit is a predefined default value; or, the first offset value associated with the second time unit is determined based on a downlink control signaling sent from a network device.

In embodiments of the present disclosure, when the first offset value is the fixed value, the fixed value may be determined based on a maximum time difference between reserved aperiodic sidelink transmission time-frequency resources.

In an embodiment, the second offset value associated with the first time unit is a predefined default value; or, the first offset value associated with the first time unit is determined based on a communication capability of the user equipment.

The second offset value associated with the first time unit may be understood as a processing time of the user equipment, which may be given by a protocol, or depend on a user capability. For example, the second offset value may be given by Table 8.1.4-1 in 3GPP TS 38.214 v16.3.0.

In an embodiment, the set of time units in which the sensing is to be performed provided by embodiment of the present disclosure includes time units belonging between m-Ta and n-Tb, where the m is the second time unit, the n is the first time unit, the Ta is the first offset value associated with the second time unit, and the Tb is the second offset value associated with the first time unit.

In an embodiment, the first offset value is the fixed value; or, the first offset value is the predefined default value; or, the first offset value is determined based on the downlink control signaling sent from the network device.

In embodiments of the present disclosure, when the first offset value is the fixed value, the fixed value may be determined based on the maximum time difference between the reserved aperiodic sidelink transmission time-frequency resources. In an example, the Ta is a fixed value, such as Ta = MAX_reserve_T. The MAX_reserve_T is a maximum time difference between a sidelink transmission and an aperiodic sidelink transmission time-frequency resource that the sidelink transmission can reserve. For example, in Rel16 NR V2x, MAX_reserve_T = 31.

In an embodiment, the first offset value is smaller than a difference value between the second time unit and a third time unit. The third time unit is a time domain position when the user equipment selects the first sidelink transmission time-frequency resource. In an example, in response to the user equipment performing a re-evaluation, assuming that the user equipment performs the resource selection at a time unit x and selects the first time-frequency resource at a time unit n, then Ta should be smaller than m-x.

In another embodiment, the first offset value is smaller than a difference value between the second time unit and the third time unit. The third time unit is a time domain position where the user equipment performs a second sidelink transmission, and the second sidelink transmission reserves the first sidelink transmission time-frequency resource. In response to the user equipment performing a preemption, and the user equipment performs the second sidelink transmission at a time unit x, and the second sidelink transmission reserves the first sidelink transmission time-frequency resource in a time unit m, then Ta should be smaller than m-x.

In an embodiment, when a terminal in embodiments of the present disclosure uses a periodic sidelink transmission time-frequency resource, a third offset value associated with the second time unit may be set. The set of time units in which the sensing is to be performed is determined based on the second time unit and the third offset value. The third offset value is determined based on a period value of a periodic time-frequency resource reservation of the user equipment. In an example, the third offset value may be the period value for the user equipment to perform the periodic time-frequency resource reservation, or the third offset value may be an integer multiple of the period value for the user equipment to perform the periodic time-frequency resource reservation.

In embodiments of the present disclosure, the magnitude of the third offset value is less than or equal to a set time threshold. The set time threshold may be specified by a protocol, or may be pre-configured, or may be determined based on a downlink signaling sent from the network device.

FIG. 6 is a flowchart showing a communication method according to an illustrative embodiment. As shown in FIG. 6, the communication method is performed by a user equipment and includes steps as follows.

In step S51, a set of time units in which sensing is to be performed is determined based on a second time unit and a third offset value.

In an embodiment, the set of time units in which the sensing is to be performed in embodiments of the present disclosure includes a time unit corresponding to a difference value between the second time unit and the third offset value, and the third offset value is determined based on a period value of a periodic time-frequency resource reservation of the user equipment.

In embodiments of the present disclosure, the third offset value may be the period value of the periodic time-frequency resource reservation of the user equipment, or may be an integer multiple of the period value of the periodic time-frequency resource reservation of the user equipment.

In an example, the set of time units in which the sensing is to be performed includes a time unit m-Tp. The Tp is the period value for the user equipment to perform the periodic time-frequency resource reservation or the integer multiple of the period value for the user equipment to perform the periodic time-frequency resource reservation.

In an example, the third offset value may be the period value of the periodic time-frequency resource reservation of the user equipment. The user equipment obtains a group of period values {T1, ..., TP} of a periodic resource reservation through a pre-configuration or receiving configuration information of a downlink control signaling sent from a network device, then the Tp is an element in the group of configuration values, and 1 ≤ p ≤ P.

In another example, the third offset value is the integer multiple of the period value of the periodic time-frequency resource reservation of the user equipment. For example, the user equipment obtains a group of period values {T1, ..., TP} of a periodic resource reservation through a pre-configuration or receiving configuration information of a downlink control signaling sent from the network device, then the third offset value is {T1, ..., T1*K1, T2, ..., T2*K2, ..., TP, ..., TP*KP}, where K1, ..., KP are integers; and it is satisfied that Kp*Tp does not exceed min (100 ms, m-x).

In another embodiment, the period value of the periodic time-frequency resource reservation is determined based on a set of period values of the periodic resource reservation. The set of period values of the periodic resource reservation is determined based on a pre-configuration message or based on a downlink control signaling sent from the network device.

In an example, a group of period values {T1, ..., TP} of the periodic resource reservation is obtained through the pre-configuration or receiving the configuration information of a downlink control signaling of a base station. A subset of a group of configurations is obtained through a second pre-configuration or second configuration information of a downlink control signaling of the base station, and the Tp is an element in the subset.

It can be understood that the periodic resource reservation is an optional configuration, and the above embodiments of determining the set of time units in which the sensing is to be performed based on the second time unit and the third offset value are only applicable when a resource pool configuration supports the periodic resource reservation.

In the communication method provided by embodiments of the present disclosure, the user equipment can determine according to the configuration information how to determine the set of time units in which the sensing is to be performed. Hereinafter, information configured to indicate information for determining the set of time units is called first information.

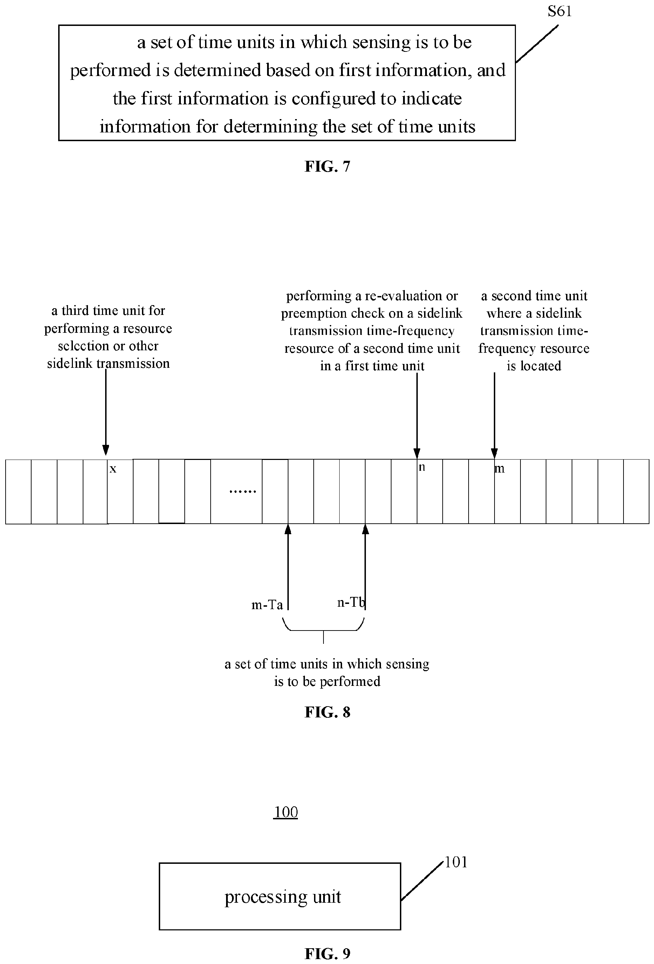

FIG. 7 is a flowchart showing a communication method according to an illustrative embodiment. As shown in FIG. 7, the communication method is performed by a user equipment and includes steps as follows.

In step S61, a set of time units in which sensing is to be performed is determined based on first information.

The first information is configured to indicate information for determining the set of time units.

In embodiments of the present disclosure, the first information is configured to indicate one or a combination of following information: a first time unit; a second time unit; a first offset value associated with the second time unit, and a second offset value associated with the first time unit; a third offset value associated with the second time unit; and the set of time units in which the sensing is to be performed being an empty set.

In an example, the first information may be obtained through a pre-configuration or receiving a downlink signaling instruction sent from a base station.

In embodiments of the present disclosure, when the first information indicates the information for determining the set of time units in the above embodiments, reference may be made to the manner of determining the set of time units in which the sensing is to be performed as described in the above embodiments. In embodiments of the present disclosure, when the first information does not indicate the information for determining the set of time units in the above embodiments, the user equipment determines a time unit for sensing according to a method in Rel16 NR V2x.

In an embodiment, when the first information indicates that the set of time units in which the sensing is to be performed is an empty set, the user equipment may arbitrarily select a time unit for monitoring according to practices.

In the communication method provided by embodiments of the present disclosure, when the user equipment is to perform the re-evaluation or preemption check, the set of time units in which the sensing is to be performed is determined, and the re-evaluation or preemption check is performed according to the sidelink sensing result in the set of time units, thereby realizing the sensing for the re-evaluation or preemption, and realizing the communication energy saving in a case of partial monitoring.

The communication method according to embodiments of the present disclosure will be described below in combination with practical applications. FIG. 8 is a schematic diagram of slot positions for a re-evaluation or preemption check based on a sensing mechanism according to an illustrative embodiment of the present disclosure. Referring to FIG. 8, the user equipment performs a resource selection at a time unit x, and the user equipment performs a re-evaluation or preemption check at a time unit n on a sidelink transmission time-frequency resource selected at a time unit m. Referring to FIG. 8, the m is greater than the n, that is, the time unit n is earlier than the time unit m. It is assumed that the user equipment uses an aperiodic sidelink transmission time-frequency resource, a first offset value associated with the time unit m is Ta, and a second offset value associated with a first time unit is Tb. The user equipment performs the resource selection or performs a second sidelink transmission at the time unit x, and Ta should be smaller than m-x. Based on the first time unit, the first offset value, the second time unit, and the second offset value, a set of time units in which sensing is to be performed is determined, which may be time units belonging between m-Ta and n-Tb as shown in FIG. 8. Performing the sensing in the time unit between the m-Ta and the n-Tb can reduce an energy consumption of the user equipment for the sensing as compared with performing the sensing in a time unit between the x and the n.

Based on the same concept, embodiments of the present disclosure also provide a communication device.

It may be understood that, in order to implement the above-mentioned functions, the communication device provided by embodiments of the present disclosure includes corresponding hardware structures and/or software modules for performing respective functions. Embodiments of the present disclosure may be implemented in a form of hardware or a combination of hardware and computer software in connection with units and algorithm steps of each example disclosed in embodiments of the present disclosure. Whether a function is performed by hardware or by hardware driven by computer software depends on specific applications and design constraints of the technical solution. Those skilled in the art may use different methods to implement the described functions for each specific application, but such implementations should not be regarded as extending beyond the scope of the technical solutions of embodiments of the present disclosure.

FIG. 9 is a block diagram of a communication device according to an illustrative embodiment. Referring to FIG. 9, the communication device 100 includes a processing unit 101. The communication device 100 is applied to a user equipment.

The processing unit 101 is configured to determine a set of time units in which sensing is to be performed in response to determining that the user equipment is to perform a re-evaluation or preemption check on a first sidelink transmission time-frequency resource in a first time unit, and perform the re-evaluation or preemption check on the first sidelink transmission time-frequency resource according to a sidelink sensing result in the set of time units.

In an embodiment, the processing unit 101 is configured to determine the set of time units in which the sensing is to be performed according to a second time unit, and the second time unit includes a time domain position of the first sidelink transmission time-frequency resource.

In an embodiment, the processing unit 101 is configured to determine the set of time units in which the sensing is to be performed according to the first time unit and the second time unit.

In an embodiment, the set of time units includes time units belonging between m-Ta and n-Tb; where the m is the second time unit, the n is the first time unit, the Ta is a first offset value associated with the second time unit, and the Tb is a second offset value associated with the first time unit.

In an embodiment, the first offset value is a fixed value; or the first offset value is a predefined default value; or the first offset value is determined based on a downlink control signaling sent from a network device.

In an embodiment, the first offset value is the fixed value, and the fixed value is a maximum time difference between reserved aperiodic sidelink transmission time-frequency resources.

In an embodiment, the second offset value is a predefined default value; or the first offset value is determined based on a communication capability of the user equipment.

In an embodiment, the first offset value is smaller than a difference value between the second time unit and a third time unit. The third time unit is a time domain position when the user equipment selects the first sidelink transmission time-frequency resource; or the third time unit is a time domain position where the user equipment performs a second sidelink transmission, and the second sidelink transmission reserves the first sidelink transmission time-frequency resource.

In an embodiment, the set of time units includes a time unit corresponding to a difference value between the second time unit and a third offset value, and the third offset value is determined based on a period value of a periodic time-frequency resource reservation of the user equipment.

In an embodiment, the third offset value is the period value of the periodic time-frequency resource reservation of the user equipment, or an integer multiple of the period value of the periodic time-frequency resource reservation of the user equipment.

In an embodiment, the period value of the periodic time-frequency resource reservation is determined based on a set of period values of a periodic resource reservation. The set of period values of the periodic resource reservation is determined based on a pre-configuration message or based on a downlink control signaling sent from a network device.

In an embodiment, the processing unit 101 is configured to determine the set of time units in which the sensing is to be performed based on first information, and the first information is configured to indicate information for determining the set of time units.

In an embodiment, the first information is determined based on a pre-configuration message or based on a downlink control signaling sent from a network device.

In an embodiment, the first information is configured to indicate one or a combination of following information: the first time unit; a second time unit, which includes a time domain position of the first sidelink transmission time-frequency resource; a first offset value associated with the second time unit, and a second offset value associated with the first time unit; a third offset value associated with the second time unit; and the set of time units in which the sensing is to be performed being an empty set.

With respect to the devices in the above embodiments, the specific manners of individual modules for performing operations therein have been described in detail in embodiments regarding the methods, which will not be elaborated herein.

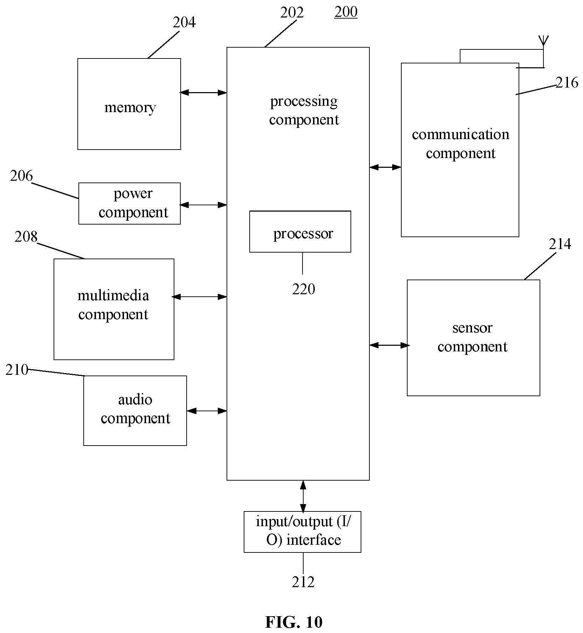

FIG. 10 is a block diagram of a device 200 for communication according to an illustrative embodiment. For example, the device 200 may be a mobile phone, a computer, a digital broadcast terminal, a messaging device, a game console, a tablet device, a medical device, a fitness device, a personal digital assistant, or the like.

Referring to FIG. 10, the device 200 may include one or more of the following components: a processing component 202, a memory 204, a power component 206, a multimedia component 208, an audio component 210, an input/output (I/O) interface 212, a sensor component 214, and a communication component 216.

The processing component 202 typically controls overall operations of the device 200, such as the operations associated with display, phone calls, data communications, camera operations, and recording operations. The processing component 202 can include one or more processors 220 to execute instructions to perform all or some of the steps in the above-described methods. Moreover, the processing component 202 may include one or more modules which facilitate the interaction between the processing component 202 and other components. For instance, the processing component 202 may include a multimedia module to facilitate the interaction between the multimedia component 208 and the processing component 202.

The memory 204 is configured to store various types of data to support the operation of the device 200. Examples of such data include instructions for any applications or methods operated on the device 200, contact data, phonebook data, messages, pictures, videos, etc. The memory 204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 206 provides power to various components of the device 200. The power component 206 may include a power management system, one or more power sources, and any other components associated with the generation, management, and distribution of power in the device 200.

The multimedia component 208 includes a screen providing an output interface between the device 200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 208 includes a front camera and/or a rear camera. The front camera and/or the rear camera may receive an external multimedia datum while the device 200 is in an operation mode, such as a photographing mode or a video mode. Each of the front camera and the rear camera may be a fixed optical lens system or have focus and optical zoom capability.

The audio component 210 is configured to output and/or input audio signals. For example, the audio component 210 includes a microphone (MIC) configured to receive an external audio signal when the device 200 is in an operation mode, such as a call mode, a recording mode, and a voice recognition mode. The received audio signal may be further stored in the memory 204 or transmitted via the communication component 216. In some embodiments, the audio component 210 further includes a speaker to output audio signals.

The I/O interface 212 provides an interface between the processing component 202 and peripheral interface modules, such as keyboards, click wheels, buttons, and the like. The buttons may include, but are not limited to, a home button, a volume button, a starting button, and a locking button.

The sensor component 214 includes one or more sensors to provide status assessments of various aspects of the device 200. For instance, the sensor component 214 may detect an open/closed status of the device 200, relative positioning of components, e.g., the display and the keypad, of the device 200. The sensor component 214 may also detect a change in position of the device 200 or a component of the device 200, a presence or absence of user contact with the device 200, an orientation or an acceleration/deceleration of the device 200, and a change in temperature of the device 200. The sensor component 214 may include a proximity sensor configured to detect the presence of nearby objects without any physical contact. The sensor component 214 may further include a light sensor, such as a CMOS or CCD image sensor, for use in imaging applications. In some embodiments, the sensor component 214 may further include an accelerometer sensor, a gyroscope sensor, a magnetic sensor, a pressure sensor, or a temperature sensor.

The communication component 216 is configured to facilitate communication, wired or wireless, between the device 200 and other devices. The device 200 can access a wireless network based on a communication standard, such as WiFi, 2G, or 3G, or a combination thereof. In an illustrative embodiment, the communication component 216 receives a broadcast signal or broadcast associated information from an external broadcast management system via a broadcast channel. In an illustrative embodiment, the communication component 216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned method.

In an illustrative embodiment, there is also provided a non-transitory computer readable storage medium including instructions, such as included in the memory 204, executable by the processor 220 in the device 200, for completing the above-mentioned method. For example, the non-transitory computer-readable storage medium may be a ROM, a random access memory (RAM), a CD-ROM, a magnetic tape, a floppy disc, an optical data storage device, and the like.

It is further understood that the phrase "a plurality of" used in this disclosure refers to two or more, and other quantifiers are similar thereto. The term "and/or" describes an associated relationship of associated objects, which means that there may be three relationships, for example, the expression "A and/or B" may indicate three cases where A exists alone, A and B exist at the same time, and B exists alone. A character "/" generally indicates that contextual objects are in an "or" relationship. The singular forms "a", "an" "one", "said" and "the" used herein are intended to include plural forms, unless clearly indicated in the context otherwise.

It is further understood that terms such as "first", and "second" are used to describe various information, but these information should not be limited by these terms. These terms are only used for distinguishing information of the same type from each other and do not denote a particular order or degree of importance. As a matter of fact, the terms such as "first", and "second" may be used interchangeably. For example, first information may also be referred to as second information, and similarly, the second information may also be referred to as the first information, without departing from the scope of embodiments of the present disclosure.

It is further understood that although operations of embodiments of the present disclosure are described in a specific order in the accompanying drawings, it should not be understood as that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A communication method, performed by a user equipment and comprising:
in response to determining that the user equipment is to perform a re-evaluation or preemption check on a first sidelink transmission time-frequency resource in a first time unit, determining a set of time units in which sensing is to be performed; and
performing the re-evaluation or preemption check on the first sidelink transmission time-frequency resource according to a sidelink sensing result in the set of time units.

2. The communication method according to claim 1, wherein determining the set of time units in which the sensing is to be performed comprises:
determining the set of time units in which the sensing is to be performed according to a second time unit, wherein the second time unit comprises a time domain position of the first sidelink transmission time-frequency resource.

3. The communication method according to claim 2, wherein determining the set of time units in which the sensing is to be performed according to the second time unit comprises:
determining the set of time units in which the sensing is to be performed according to the first time unit and the second time unit.

4. The communication method according to claim 3, wherein the set of time units comprises time units belonging between m-Ta and n-Tb;
where the m is the second time unit, the n is the first time unit, the Ta is a first offset value associated with the second time unit, and the Tb is a second offset value associated with the first time unit.

5. The communication method according to claim 4, wherein
the first offset value is a fixed value; or
the first offset value is a predefined default value; or
the first offset value is determined based on a downlink control signaling sent from a network device.

6. The communication method according to claim 5, wherein the first offset value is the fixed value, and the fixed value is a maximum time difference between reserved aperiodic sidelink transmission time-frequency resources.

7. The communication method according to claim 4, wherein
the second offset value is a predefined default value; or
the first offset value is determined based on a communication capability of the user equipment.

8. The communication method according to claim 4, wherein the first offset value is smaller than a difference value between the second time unit and a third time unit; wherein
the third time unit is a time domain position when the user equipment selects the first sidelink transmission time-frequency resource; or
the third time unit is a time domain position where the user equipment performs a second sidelink transmission, and the second sidelink transmission reserves the first sidelink transmission time-frequency resource.

9. The communication method according to claim 2, wherein the set of time units comprises a time unit corresponding to a difference value between the second time unit and a third offset value, wherein the third offset value is determined based on a period value of a periodic time-frequency resource reservation of the user equipment.

10. The communication method according to claim 9, wherein the third offset value is the period value of the periodic time-frequency resource reservation of the user equipment, or an integer multiple of the period value of the periodic time-frequency resource reservation of the user equipment.

11. The communication method according to claim 10, wherein the period value of the periodic time-frequency resource reservation is determined based on a set of period values of a periodic resource reservation; wherein
the set of period values of the periodic resource reservation is determined based on a pre-configuration message or based on a downlink control signaling sent from a network device.

12. The communication method according to claim 1, wherein determining the set of time units in which the sensing is to be performed comprises:
determining the set of time units in which the sensing is to be performed based on first information, wherein the first information is configured to indicate information for determining the set of time units.

13. The communication method according to claim 12, wherein the first information is determined based on a pre-configuration message or based on a downlink control signaling sent from a network device.

14. The communication method according to claim 12, wherein the first information is configured to indicate one or a combination of following information:
the first time unit;
a second time unit, which comprises a time domain position of the first sidelink transmission time-frequency resource;
a first offset value associated with the second time unit, and a second offset value associated with the first time unit;
a third offset value associated with the second time unit; and
the set of time units in which the sensing is to be performed being an empty set.

15. A communication device, applied to a user equipment and comprising:
a processing unit configured to determine a set of time units in which sensing is to be performed in response to determining that the user equipment is to perform a re-evaluation or preemption check on a first sidelink transmission time-frequency resource in a first time unit, and
perform the re-evaluation or preemption check on the first sidelink transmission time-frequency resource according to a sidelink sensing result in the set of time units.

16. The communication device according to claim 15, wherein the processing unit is configured to determine the set of time units in which the sensing is to be performed according to a second time unit, wherein the second time unit comprises a time domain position of the first sidelink transmission time-frequency resource.

17. The communication device according to claim 16, wherein the processing unit is configured to determine the set of time units in which the sensing is to be performed according to the first time unit and the second time unit.

18. The communication device according to claim 17, wherein the set of time units comprises time units belonging between m-Ta and n-Tb;
where the m is the second time unit, the n is the first time unit, the Ta is a first offset value associated with the second time unit, and the Tb is a second offset value associated with the first time unit.

19. The communication device according to claim 18, wherein
the first offset value is a fixed value; or
the first offset value is a predefined default value; or
the first offset value is determined based on a downlink control signaling sent from a network device.

20. The communication device according to claim 19, wherein the first offset value is the fixed value, and the fixed value is a maximum time difference between reserved aperiodic sidelink transmission time-frequency resources.

21. The communication device according to claim 18, wherein
the second offset value is a predefined default value; or
the first offset value is determined based on a communication capability of the user equipment.

22. The communication device according to claim 18, wherein the first offset value is smaller than a difference value between the second time unit and a third time unit; wherein
the third time unit is a time domain position when the user equipment selects the first sidelink transmission time-frequency resource; or
the third time unit is a time domain position where the user equipment performs a second sidelink transmission, and the second sidelink transmission reserves the first sidelink transmission time-frequency resource.

23. The communication device according to claim 16, wherein the set of time units comprises a time unit corresponding to a difference value between the second time unit and a third offset value, wherein the third offset value is determined based on a period value of a periodic time-frequency resource reservation of the user equipment.

24. The communication device according to claim 23, wherein the third offset value is the period value of the periodic time-frequency resource reservation of the user equipment, or an integer multiple of the period value of the periodic time-frequency resource reservation of the user equipment.

25. The communication device according to claim 24, wherein the period value of the periodic time-frequency resource reservation is determined based on a set of period values of a periodic resource reservation; wherein
the set of period values of the periodic resource reservation is determined based on a pre-configuration message or based on a downlink control signaling sent from a network device.

26. The communication device according to claim 15, wherein the processing unit is configured to determine the set of time units in which the sensing is to be performed based on first information, wherein the first information is configured to indicate information for determining the set of time units.

27. The communication device according to claim 26, wherein the first information is determined based on a pre-configuration message or based on a downlink control signaling sent from a network device.

28. The communication device according to claim 26, wherein the first information is configured to indicate one or a combination of following information:
the first time unit;
a second time unit, which comprises a time domain position of the first sidelink transmission time-frequency resource;
a first offset value associated with the second time unit, and a second offset value associated with the first time unit;
a third offset value associated with the second time unit; and
the set of time units in which the sensing is to be performed being an empty set.

29. A communication device, comprising:
a processor;
a memory configured to store a processor-executable instruction;
wherein the processor is configured to execute the communication method according to any one of claims 1 to 14.

30. A non-transitory computer-readable storage medium, wherein when an instruction in the storage medium is executed by a processor, a user equipment is capable of executing the communication method according to any one of claims 1 to 14.
